# EUROPÄISCHE PATENTSCHRIFT

(11) **EP 4 332 517 B1**
(45) Veröffentlichungstag und Bekanntmachung des Hinweises auf die Patenterteilung: **18.03.2026**
(21) Anmeldenummer: 23193860.6
(22) Anmeldetag: 29.08.2023
(51) Int. Cl.: G01F 1/667

(54) **VERFAHREN ZUM BETREIBEN EINES ULTRASCHALLDURCHFLUSSMESSGERÄTS UND ULTRASCHALLDURCHFLUSSMESSGERÄT**
METHOD FOR OPERATING AN ULTRASONIC FLOW METER AND ULTRASONIC FLOW METER
PROCÉDÉ DE FONCTIONNEMENT D'UN DÉBITMÈTRE À ULTRASONS ET DÉBITMÈTRE À ULTRASONS

(30) Priorität: 01.09.2022 DE 102022122181
(43) Veröffentlichungstag der Anmeldung: 06.03.2024
(73) Patentinhaber: Krohne AG, 4019 Basel (CH)
(72) Erfinder: Huijzer, Arie, 3363 BS Sliedrecht (NL)
(74) Vertreter: Gesthuysen Patentanwälte

(56) Entgegenhaltungen:
- EP-A1- 3 521 773
- US-A1- 2003 172 743
- US-A1- 2004 123 666
- US-B2- 7 096 135

## Beschreibung

Die Erfindung geht aus von einem Verfahren zum Betreiben eines Ultraschalldurchflussmessgeräts, wobei das Ultraschalldurchflussmessgerät wenigstens einen ersten Ultraschallwandler, wenigstens einen zweiten Ultraschallwandler, wenigstens ein Messrohr mit einer Messrohrwand und wenigstens eine Steuer- und Auswerteeinheit aufweist, wobei der erste Ultraschallwandler zumindest zur Aussendung eines Messsignals ausgebildet ist und wobei der zweite Ultraschallwandler zumindest für den Empfang des Messsignals ausgebildet ist, wobei der erste Ultraschallwandler und der zweite Ultraschallwandler an dem Messrohr angeordnet sind und wobei das Messrohr im Betrieb von einem zu vermessenden Medium durchströmt wird.

Darüber hinaus betrifft die Erfindung ein Ultraschalldurchflussmessgerät mit wenigstens einem ersten Ultraschallwandler, mit wenigstens einem zweiten Ultraschallwandler, mit wenigstens einem Messrohr mit einer Messrohrwand und mit wenigstens einer Steuer- und Auswerteeinheit, wobei der erste Ultraschallwandler zumindest zur Aussendung eines Messsignals ausgebildet ist und wobei der zweite Ultraschallwandler zumindest für den Empfang des Messsignals ausgebildet ist, wobei der erste Ultraschallwandler und der zweite Ultraschallwandler an dem Messrohr angeordnet sind und wobei das Messrohr im Betrieb von einem zu vermessenden Medium durchströmt wird.

Die Genauigkeit von aus dem Stand der Technik bekannten Ultraschalldurchflussmessgeräten ist unter anderem abhängig davon, wie gut, d.h. wie genau, ein von einem ersten Ultraschallwandler ausgesendetes Messsignal von einem zweiten Ultraschallwandler erfasst werden kann. Zur möglichst genauen Bestimmung der Laufzeit des Messsignals ist es wichtig, den Anfang des Messsignals möglichst gut von Störsignalen unterscheiden zu können.

Ein von einem ersten Ultraschallwandler ausgesendetes Messsignal wird im Betrieb nicht nur über das Medium zu dem zweiten Ultraschallwandler übertragen. Wenigstens ein Teil des Messsignals gelangt ebenfalls über das Messrohr zu dem zweiten Ultraschallwandler und wird dort als Störsignal erfasst. Da das Störsignal im Inneren der Messrohrwand vielfach reflektiert wird, erreicht ein Teil des Störsignals den zweiten Ultraschallwandler zeitgleich und/oder zeitlich nach dem Nutzsignal. Zudem trifft ein Teil des Störsignals vor dem Nutzsignal auf den zweiten Ultraschallwandler, da die Schallgeschwindigkeit im Messrohr höher als im Medium ist. Aufgrund der zeitlichen Ausdehnung des Störsignals am zweiten Ultraschallwandler ist das Nutzsignal stets von einem Störsignal überlagert.

Wenn also im Rahmen der vorliegenden Erfindung von dem am zweiten Ultraschallwandler erfassten Nutzsignal gesprochen wird, so ist damit stets eine Überlagerung des eigentlichen Nutzsignals und des zeitgleich mit dem Nutzsignal eintreffenden Störsignal zu verstehen.

Aus der Druckschrift EP 0 9499 485 A1 ist ein Ultraschalldurchflussmessgerät und ein Verfahren zum Betreiben eines Ultraschalldurchflussmessgeräts bekannt, wobei in Kenntnis von Prozessparametern ein digitales Amplitudensignal bestimmt und einem Amplitudenfilter zugeführt wird. Mit dem Amplitudenfilter wird dann die Laufzeit des Messsignals bestimmt.

Die Druckschrift US 2004/0123666 A1 beschreibt ein Verfahren zum Betreiben eines Ultraschalldurchflussmessgeräts, wobei sich am Empfangswandler ein sich durch das Messrohrinnere ausbreitendes Nutzsignal und ein sich über die Messrohrwand ausbreitendes Störsignal überlagern. Zur Verbesserung des Signal-zu-Rausch-Verhältnisses ist ein Dämpfungsmaterial auf das Messrohr aufgebracht.

Aus der Druckschrift US 7,096,135 B2 ist ein Verfahren zum Betreiben eines Ultraschalldurchflussmessgeräts bekannt, wobei am Empfangswandler das Signal-zu-Rausch-Verhältnis von dem Empfangssignal zu dem Grundrauschen des Messsystems bestimmt wird und wobei in Abhängigkeit des Signal-zu-Rausch-Verhältnisses ein Auswerteverfahren zur Bestimmung des Durchflusses gewählt wird.

Ausgehend von dem dargelegten Stand der Technik ist es Aufgabe der vorliegenden Erfindung ein Verfahren zum Betreiben eines Ultraschalldurchflussmessgeräts und ein Ultraschalldurchflussmessgerät anzugeben, das eine Verbesserung des Ultraschalldurchflussmessgeräts gewährleistet.

Gemäß einer ersten Lehre der Erfindung wird die zuvor genannte Aufgabe durch ein eingangs beschriebenes Verfahren dadurch gelöst,
dass das Verfahren während einer Messung die folgenden Schritte umfasst:
- Aussenden eines Messsignals durch den ersten Ultraschallwandler, wobei sich ein erster Teil des Messsignals als Störsignal entlang und/oder innerhalb der Messrohrwand ausbreitet und wobei sich ein zweiter Teil des Messsignals als Nutzsignal durch das Medium ausbreitet,
- Empfangen des Störsignals und des Nutzsignals durch den zweiten Ultraschallwandler und Weiterleiten des Störsignals und des Nutzsignals an die Steuer- und Auswerteeinheit,
- Bestimmen einer Störamplitude des Störsignals und Bestimmen einer Nutzamplitude des Nutzsignals durch die Steuer- und Auswerteeinheit,
- Bestimmen des Amplitudenverhältnisses von Nutzamplitude und Störamplitude,
- Bereitstellung einer Meldung wenn das Amplitudenverhältnis einen festgelegten unteren Grenzwert unterschreitet oder einen festgelegten oberen Grenzwert überschreitet.

Erfindungsgemäß wurde erkannt, dass ein Maß für die Genauigkeit des Ultraschalldurchflussmessgeräts das Amplitudenverhältnis zwischen Nutzsignal und Störsignal ist. Je mehr sich das Nutzsignal von dem Störsignal abhebt, umso besser, also umso genauer, lässt sich das tatsächliche Nutzsignal von dem Störsignal separieren. Grundsätzlich unterscheidet sich das Nutzsignal aufgrund der Form und/oder der Frequenz und/oder der Höhe der Peaks von dem Störsignal, sodass das Nutzsignal basierend auf den zuvor genannten Parametern von dem Störsignal separiert werden kann.

Dadurch, dass das Amplitudenverhältnis aus gemessen Werten gebildet wird, werden stets sämtliche Schwankungen von Prozessparametern, die einen Einfluss auf das Störsignal und/oder das Nutzsignal haben, berücksichtigt. Insbesondere gegenüber solchen Verfahren, die das Störsignal und/oder eine Abschwächung der Nutzamplitude anhand von Prozessparametern theoretisch vorhersagen, ist das erfindungsgemäße Verfahren vorteilhaft. Denn einerseits ist es nicht notwendig zusätzliche Prozessparameter zu erfassen, um die Störamplitude zu bestimmen. Andererseits ist sichergestellt, dass tatsächlich alle Parameter, die das Störsignal und/oder das Nutzsignal beeinflussen, automatisch erfasst werden. In der Folge kann die Messgenauigkeit bzw. die Messabweichung oder ein Maß für die Messabweichung der gemessenen Laufzeit des Nutzsignals aufgrund der Überlagerung durch das Störsignal besonders genau angegeben werden.

Dabei wird eine Meldung bereitgestellt, wenn das Verhältnis von Nutzamplitude zu Störamplitude einen festgelegten unteren Grenzwert unterschreitet bzw. wenn das Verhältnis von Störamplitude zu Nutzamplitude einen festgelegten oberen Grenzwert überschreitet.

Gemäß einer ersten Ausgestaltung des Verfahrens wird die Störamplitude aus dem zeitlich vor dem Nutzsignal liegenden Störsignal oder aus dem zeitlich nach dem Nutzsignal liegenden Störsignal bestimmt.

Wie bereits dargelegt, trifft das Störsignal sowohl zeitlich vor dem Nutzsignal auf den zweiten Ultraschallwandler und setzt sich darüber hinaus auch nach Eintreffen des Nutzsignals fort. Gemäß einer Ausgestaltung erhöht sich die Amplitude des Störsignals mit fortschreitender Zeit.

Da die Größe der Störamplitude des Störsignals, das genau zum Zeitpunkt des Eintreffens des Nutzsignals auf den zweiten Ultraschallwandler trifft, besonders relevant ist, wird gemäß einer Ausgestaltung zur Bestimmung des Amplitudenverhältnisses die Störamplitude mit einem Korrekturfaktor korrigiert. Wird die Störamplitude aus einem Störsignal bestimmt, das zeitlich vor dem Nutzsignal an dem zweiten Ultraschallwandler ankommt, so ist der Korrekturfaktor vorzugsweise größer 1. Wird die Störamplitude aus einem Störsignal, das zeitlich nach dem Nutzsignal an dem zweiten Ultraschallwandler ankommt, bestimmt, so ist der Korrekturfaktor vorzugsweise kleiner 1.

Besonders bevorzugt wird dazu der Verlauf des Störsignals vor der Messung gesondert, also ohne das Vorhandensein des Nutzsignals, erfasst und analysiert. Beispielsweise wird dazu das Nutzsignal blockiert, damit es den zweiten Ultraschallwandler nicht erreicht. Basierend auf dem erfassten Verlauf des Störsignals wird gemäß einer Ausgestaltung ein Korrekturfaktor bestimmt. Besonders bevorzugt wird ein erster Korrekturfaktor bestimmt, für den Fall, dass die Störamplitude aus dem Störsignal, das zeitlich vor dem Nutzsignal auf den zweiten Ultraschallwandler trifft, bestimmt wird und es wird weiterhin ein zweiter Korrekturfaktor bestimmt, für den Fall, dass die Störamplitude aus dem Störsignal, das zeitlich nach dem Nutzsignal auf den zweiten Ultraschallwandler trifft, bestimmt wird.

Gemäß einer ersten erfindungsgemäßen Ausgestaltung des Verfahrens wird zur Bestimmung der Störamplitude die Amplitude des Störsignals über eine Mehrzahl von Peaks gemittelt. Diese Ausgestaltung weist den Vorteil auf, dass das Grundrauschen des Störsignals herausgemittelt wird. Dabei liegen die zu mittelnden Peaks möglichst dicht an dem Nutzsignal. Damit ist der Fehler bei der Bestimmung des Amplitudenverhältnisses besonders klein, da die Störamplitude so gut wie möglich der Störamplitude, die zeitgleich mit dem eigentlichen Nutzsignal auf den zweiten Ultraschallwandler trifft, entspricht. Beispielsweise wird über einen festgelegten Zeitraum vor dem Eintreffen des Nutzsignals gemittelt. Vorzugsweise wird über einen Zeitraum von wenigstens 50 µs, besonders bevorzugt von wenigstens 100 µs, insbesondere von wenigstens 150 µs vor dem Eintreffen des Nutzsignals gemittelt.

Gemäß einer ebenfalls bevorzugten Ausgestaltung des Verfahrens wird zur Bestimmung der Nutzamplitude die Amplitude des Nutzsignals über eine Mehrzahl von Peaks gemittelt. Vorzugsweise wird über wenigstens zwei Peaks, besonders bevorzugt über wenigstens vier Peaks, insbesondere über wenigstens sechs Peaks gemittelt.

Gemäß einer weiteren Ausgestaltung entspricht die Nutzamplitude und/oder die Störamplitude der Peak-to-Peak-Amplitude um einen Nulldurchgang eines Störsignals bzw. eines Nutzsignals. Zur Bestimmung der Störamplitude wird dazu nicht der Nulldurchgang beim Eintreffen des Nutzsignals gewählt. Diese Ausgestaltung gewährleistet, dass die Amplitudenbestimmung insbesondere des Nutzsignals besonders genau erfolgt, da sich die Höhe der einzelnen Peaks des Nutzsignals unmittelbar nach Eintreffen des Nutzsignals ändert. Besonders bevorzugt entspricht daher die Nutzamplitude der Peak-to-Peak-Amplitude des, zeitlich gesehen, ersten Peaks des Nutzsignals. Dies ist insbesondere dann vorteilhaft, wenn die Laufzeit des Nutzsignals eine zufällige Variation aufweist.

Alternativ kann statt einer Peak-to-Peak-Amplitude die Nutzamplitude und/oder die Störamplitude auch der Amplitude eines Peaks ausgehend von der Nulllinie des Störsignals oder des Nutzsignals entsprechen. Denkbar ist es ebenfalls eine Mehrzahl von solchen Amplituden ausgehend von der Nulllinie zur Bestimmung der Störamplitude bzw. der Nutzamplitude zu mitteln.

Gemäß einer weiteren bevorzugten Ausgestaltung wird zur Bestimmung der Nutzamplitude und/oder der Störamplitude die Einhüllende eines zeitlich begrenzten Störsignals bzw. eines zeitlich begrenzten Nutzsignals bestimmt, wobei die Störamplitude das Maximum der Einhüllenden des zeitlich begrenzten Störsignals ist und/oder wobei die Nutzamplitude das Maximum der Einhüllenden des zeitlich begrenzten Nutzsignals ist.

Besonders bevorzugt entspricht die Störamplitude einfach der maximalen Peak-to-Peak-Amplitude innerhalb eines festgelegten ersten Zeitraums und/oder die Nutzamplitude entspricht der maximalen Peak-to-Peak-Amplitude innerhalb eines festgelegten zweiten Zeitraums.

Im Betrieb kann das Nutzsignal einen zufälligen zeitlichen Versatz aufweisen, der auf Schwankungen der Schallgeschwindigkeit und/oder des Durchflusses zurückzuführen ist. Dieser zufällige Zeitversatz wird als Jitter bezeichnet. Der zufällige Zeitversatz hat eine Variation des Phasenversatzes zwischen dem Nutzsignal und dem Störsignal zur Folge, sodass das Nutzsignal teils konstruktiv, teils destruktiv durch das Störsignal überlagert wird. In der Folge variiert ebenso die gemessene Laufzeit des Nutzsignals.

Dieser zufällige Zeitversatz kann auch dazu genutzt werden, die durch das Störsignal verursachte Messabweichung insbesondere durch Mittelung zu verringern.

Gemäß einer zweiten erfindungsgemäßen Ausgestaltung wird dazu das gemessene Nutzsignal, das sowohl durch das Störsignal überlagert ist als auch einen zufälligen Zeitversatz (Jitter) aufweist, über eine Mehrzahl von Messungen gemittelt. Aufgrund der teils konstruktiven, teils destruktiven Überlagerung verringert sich durch die Mittelung insgesamt die durch das Störsignal verursachte Messabweichung. In der Folge wird die Messgenauigkeit des Durchflussmessgeräts verbessert.

Gemäß einer nächsten Ausgestaltung wird der zufällige Zeitversatz des Nutzsignals bestimmt und das Verhältnis aus Nutzsignal und Störsignal um diesen Zeitversatz kompensiert. Zur Bestimmung des Zeitversatzes wird beispielsweise die Standardabweichung der gemessenen Laufzeit über eine Mehrzahl von Messungen bestimmt. Bei der Bestimmung der Störamplitude und/oder der Nutzamplitude wird der gemessene Zeitversatz durch geeignete Wahl beispielsweise des zu mittelnden Störsignals und/oder Nutzsignals berücksichtigt. Insofern kann bei der Bildung des Amplitudenverhältnisses ein Fehler, der auf diesen zufälligen Zeitversatz zurückzuführen ist, vermieden oder zumindest reduziert werden.

Gemäß der zweiten erfindungsgemäßen Ausgestaltung wird das gemessene Nutzsignal als Zeitbasis genommen, also im Verhältnis zum Störsignal ortsfest gehalten, sodass aus dieser Sicht das Störsignal einen zufälligen Zeitversatz aufweist. Wird nun das Störsignal über eine Mehrzahl von Messungen gemittelt, kann die Störamplitude und damit die durch das Störsignal verursachte Messabweichung weiter verringert werden.

Gemäß einer nächsten Ausgestaltung des Verfahrens ist unter der Bereitstellung einer Meldung die Ausgabe und/oder die Weiterleitung und/oder Anzeige einer Meldung zu verstehen. Beispielsweise kann dem Nutzer mitgeteilt werden, dass die Genauigkeit des Durchflussmessgeräts aufgrund des zu niedrigen bzw. zu hohen Amplitudenverhältnisses gering ist. Zudem kann die Information des zu geringen bzw. zu hohen Amplitudenverhältnisses auch zum Auslösen weiterer Maßnahmen genutzt werden. Beispielsweise kann die Unterschreitung eines unteren Grenzwertes oder die Überschreitung eines oberen Grenzwertes ein Hinweis dafür sein, dass wenigstens ein Prozessparameter stark schwankt. Die Unterschreitung eines unteren Grenzwertes oder die Überschreitung eines oberen Grenzwertes kann insofern gemäß einer Ausgestaltung als Trigger für die Erfassung und/oder Kontrolle von wenigstens einem Prozessparameter, wie beispielsweise dem Druck oder der Temperatur dienen. Ebenso kann die Unterschreitung eines unteren Grenzwertes oder die Überschreitung eines oberen Grenzwertes ein Hinweis darauf sein, dass das Nutzsignal aufgrund einer zu hohen oder zu niedrigen Geschwindigkeit des zu vermessenden Mediums nicht mehr optimal auf den zweiten Ultraschallwandler trifft.

Gemäß einer zweiten Lehre der vorliegenden Erfindung wird die eingangs genannte Aufgabe durch ein eingangs beschriebenes Ultraschalldurchflussmessgerät dadurch gelöst, dass die Steuer- und Auswerteeinheit zur Durchführung eines der zuvor beschriebenen Verfahren ausgebildet und eingerichtet ist.

Es gibt nun eine Vielzahl von Möglichkeiten das erfindungsgemäße Verfahren und das erfindungsgemäße Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen zusammen mit der Zeichnung.

In der Zeichnung zeigen
- Fig. 1: ein erstes Ausführungsbeispiel eines Ultraschalldurchflussmessgeräts,
- Fig. 2: das in Fig. 1 dargestellte Ausführungsbeispiel in axialer Draufsicht auf das Messrohr,
- Fig. 3: ein am zweiten Ultraschallwandler empfangenes Messsignal,
- Fig. 4: ein weiteres am zweiten Ultraschallwandler empfangenes Messsignal,
- Fig. 5: ein Ausführungsbeispiel eines Verfahrens zum Betreiben eines Ultraschalldurchflussmessgeräts.

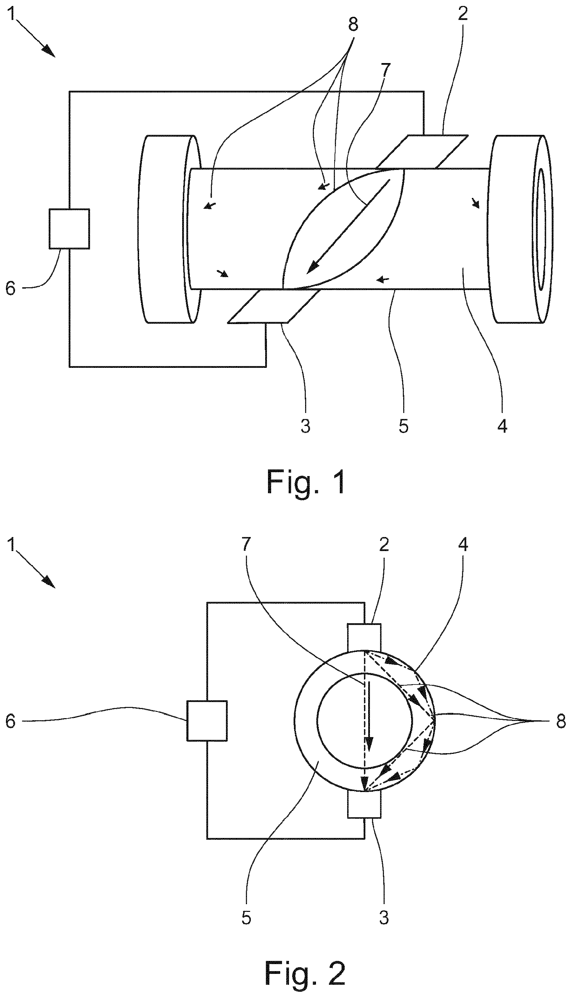

Fig. 1 zeigt ein erstes Ausführungsbeispiel eines Ultraschalldurchflussmessgeräts 1, das zur Durchführung eines erfindungsgemäßen Verfahrens ausgebildet und eingerichtet ist. Das Ultraschalldurchflussmessgerät 1 umfasst einen ersten Ultraschallwandler 2, einen zweiten Ultraschallwandler 3, ein Messrohr 4 mit einer Messrohrwand 5 und eine Steuer- und Auswerteeinheit 6.

Der erste Ultraschallwandler 2 und der zweite Ultraschallwandler 3 sind in Strömungsrichtung eines Mediums gesehen derart versetzt an dem Messrohr angeordnet, dass ein von dem ersten Ultraschallwandler 2 ausgesendetes Messsignal den zweiten Ultraschallwandler 3 nach einem Durchlauf durch das Medium erreicht.

Der zweite Ultraschallwandler 3 ist für den Empfang des Messsignals ausgebildet. In einer zweiten Messung sendet der zweite Ultraschallwandler 3 ein Messsignal in Richtung des ersten Ultraschallwandlers 2. In dieser Messsituation ist der erste Ultraschallwandler 2 für den Empfang des Messsignals ausgebildet.

Darüber hinaus ist eine Steuer- und Auswerteeinheit 6 vorhanden, die mit dem ersten Ultraschallwandler 2 und dem zweiten Ultraschallwandler 3 verbunden ist.

Sendet im Betrieb der erste Ultraschallwandler 2 ein Messsignal in Richtung des zweiten Ultraschallwandlers 3, so breitet sich das Messsignal einerseits als Nutzsignal 7 durch das Messrohrinnere und darüber hinaus als Störsignal 8 über die Messrohrwand 5 aus.

Am zweiten Ultraschallwandler 3 überlagert sich dann im Betrieb das Störsignal 8 mit dem Nutzsignal 7, wodurch die genaue Erfassung des Nutzsignals 7 erschwert wird und insofern die Messgenauigkeit negativ beeinflusst wird.

Das Ultraschalldurchflussmessgerät 1 ist daher derart eingerichtet, dass es im Betrieb mittels des erfindungsgemäßen Verfahrens eine Echtzeitbeurteilung der Messgenauigkeit erlaubt.

Fig. 2 zeigt das Ultraschalldurchflussmessgerät 1, im Detail das Messrohr 4 in axialer Draufsicht. Zu sehen ist, dass die Ultraschallwandler 2, 3 auf der Messrohrwand 5 angeordnet sind. Das dargestellte Ultraschalldurchflussmessgerät 1 ist also als Clamp-on Durchflussmessgerät ausgebildet.

Darüber hinaus ist dargestellt, wie sich das von dem ersten Ultraschallwandler 2 ausgesendete Messsignals als Nutzsignal 7 durch das Messrohrinnere und als Störsignal 8 entlang der Messrohrwand 5 fortsetzt. Im Inneren der Messrohrwand 5 wird das Störsignal 8 mehrfach reflektiert, sodass es am zweiten Ultraschallwandler 3 sowohl zeitlich vor dem Nutzsignal 7 ankommt und sich darüber hinaus auch über das Nutzsignal 7 zeitlich fortsetzt.

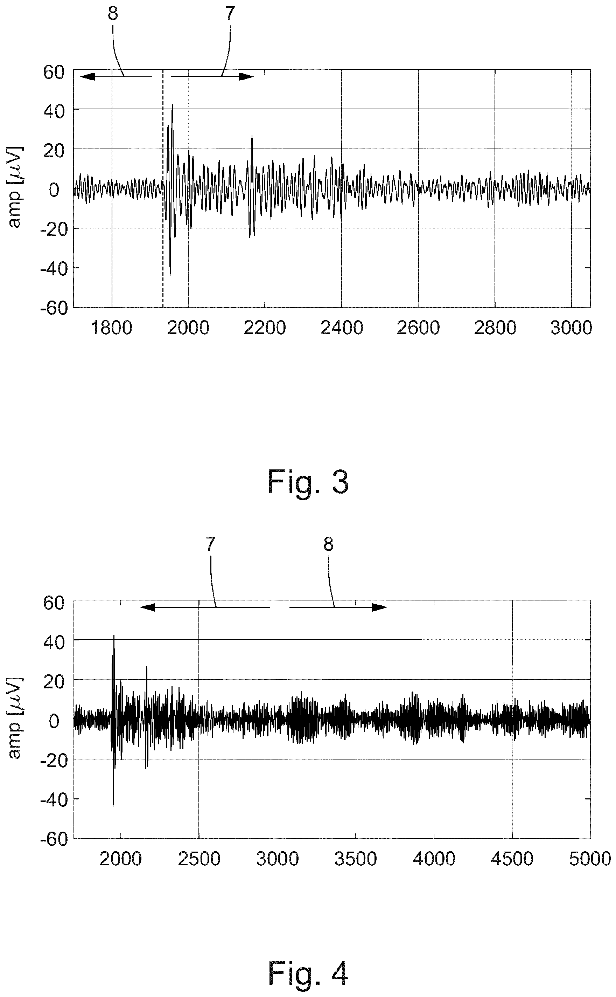

Fig. 3 zeigt ein von dem zweiten Ultraschallwandler 3 empfangenes Messsignal umfassend ein Nutzsignal 7 und ein Störsignal 8. Gemäß einem Ausführungsbeispiel des erfindungsgemäßen Verfahrens wird die Störamplitude aus dem Störsignal 8, das zeitlich vor dem Nutzsignal 7 an dem zweiten Ultraschallwandler 3 anliegt, bestimmt. Ebenso kann die Störamplitude aus dem Störsignal 8, das zeitlich nach dem Nutzsignal 7 auf den Ultraschallwandler 3 trifft, bestimmt werden.

Fig. 4 zeigt ein weiteres von dem zweiten Ultraschallwandler 3 empfangenes Messsignal umfassend ein Nutzsignal 7 und ein Störsignal 8. Im dargestellten Ausführungsbeispiel wird die Störamplitude aus dem Störsignal 8 bestimmt, das zeitlich nach dem Nutzsignal 7 an dem zweiten Ultraschallwandler 3 anliegt.

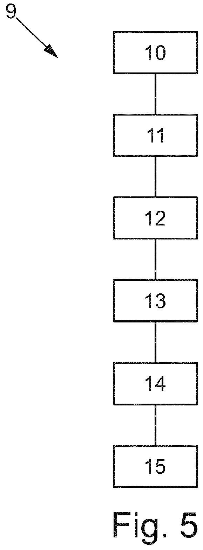

Fig. 5 zeigt ein erstes Ausführungsbeispiel eines erfindungsgemäßen Verfahrens 9 zum Betreiben eines Ultraschalldurchflussmessgeräts 1. Das Ultraschalldurchflussmessgerät 1 ist wie in Fig. 1 dargestellt ausgebildet.

In einem ersten Schritt 10 sendet der erste Ultraschallwandler 2 ein Messsignal in Richtung des zweiten Ultraschallwandlers 3 aus. Ein erster Teil des Messsignals breitet sich als Störsignal 8 entlang und/oder innerhalb der Messrohrwand 5 aus, ein zweiter Teil des Messsignals breitet sich als Nutzsignal 7 durch das Medium aus.

In einem nächsten Schritt 11 empfängt der zweite Ultraschallwandler 3 das Störsignal 8 und das Nutzsignal 7 und leitet das Störsignal 8 und das Nutzsignal 7 an die Steuer- und Auswerteeinheit 6 weiter.

Die Steuer- und Auswerteeinheit bestimmt in einem nächsten Schritt 12 die Störamplitude des Störsignals 8 sowie die Nutzamplitude des Nutzsignals 7. Die Bestimmung der Störamplitude und der Nutzamplitude kann gemäß sämtlichen oben ausgeführten Varianten erfolgen.

Anschließend bestimmt 13 die Steuer- und Auswerteeinheit 6 das Amplitudenverhältnis von Nutzamplitude und Störamplitude.

Unterschreitet bzw. überschreitet das Amplitudenverhältnis einen zuvor festgelegten Grenzwert, so wird eine Meldung, insbesondere in Form einer Mitteilung an den Nutzer, ausgegeben 14, sodass dem Nutzer mitgeteilt wird, dass die Messgenauigkeit aktuell vermindert ist.

Zudem kann optional auch eine Kontrolle von weiteren Prozessparametern durchgeführt werden 15.

Im Ergebnis weist das dargestellte Verfahren 9 zum Betreiben eines Ultraschalldurchflussmessgeräts 1 insofern eine Verbesserung auf, als dass die Bestimmung der durch ein Störsignal verursachte Messabweichung online überwacht werden kann, sodass unmittelbar bzw. frühzeitig Maßnahmen zur Korrektur der erhöhten Messabweichung ergriffen werden können.

### Bezugszeichen

- 1: Ultraschalldurchflussmessgerät
- 2: Ultraschallwandler
- 3: Ultraschallwandler
- 4: Messrohr
- 5: Messrohrwand
- 6: Steuer- und Auswerteeinheit
- 7: Nutzsignal
- 8: Störsignal
- 9: Verfahren zum Betreiben eines Ultraschalldurchflussmessgeräts
- 10: Aussenden eines Messsignals
- 11: Empfang und Weiterleitung des Messsignals
- 12: Bestimmung der Störamplitude und der Nutzamplitude
- 13: Bestimmung des Verhältnisses von Störamplitude zu Nutzamplitude
- 14: Bereitstellen einer Mitteilung
- 15: Kontrolle von wenigstens einem weiteren Prozessparameter

## Patentansprüche

1. Verfahren (9) zum Betreiben eines Ultraschalldurchflussmessgeräts (1),
wobei das Ultraschalldurchflussmessgerät (1) wenigstens einen ersten Ultraschallwandler (2), wenigstens einen zweiten Ultraschallwandler (3), wenigstens ein Messrohr (4) mit einer Messrohrwand (5) und wenigstens eine Steuer- und Auswerteeinheit (6) aufweist,
wobei der erste Ultraschallwandler (2) zumindest zur Aussendung eines Messsignals ausgebildet ist und wobei der zweite Ultraschallwandler (3) zumindest für den Empfang des Messsignals ausgebildet ist,
wobei der erste Ultraschallwandler (2) und der zweite Ultraschallwandler (3) an dem Messrohr (4) angeordnet sind,
und wobei das Messrohr (4) im Betrieb von einem zu vermessenden Medium durchströmt wird,
wobei das Verfahren (9) während einer Messung die folgenden Schritte umfasst:
- Aussenden (10) eines Messsignals durch den ersten Ultraschallwandler (2), wobei sich ein erster Teil des Messsignals als Störsignal (8) entlang und/oder innerhalb der Messrohrwand (5) ausbreitet und wobei sich ein zweiter Teil des Messsignals als Nutzsignal (7) durch das Medium ausbreitet,
- Empfangen (11) des Störsignals (8) und des Nutzsignals (7) durch den zweiten Ultraschallwandler (3) und Weiterleiten des Störsignals (8) und des Nutzsignals (7) an die Steuer- und Auswerteeinheit (6),
**gekennzeichnet durch** die Schritte:
- Bestimmen (12) einer Störamplitude des Störsignals (8) und Bestimmen (12) einer Nutzamplitude des Nutzsignals (7) durch die Steuer- und Auswerteeinheit (6),
- Bestimmen (13) des Amplitudenverhältnisses von Nutzamplitude und Störamplitude,
- Bereitstellung (14) einer Meldung wenn das Amplitudenverhältnis einen festgelegten unteren Grenzwert unterschreitet oder einen festgelegten oberen Grenzwert überschreitet,
wobei zur Bestimmung der Störamplitude die Amplitude des Störsignals (8) über eine Mehrzahl von Peaks gemittelt wird, wobei die zu mittelnden Peaks möglichst dicht an dem Nutzsignal liegen,
oder
wobei das empfangene Nutzsignal (7) über eine Mehrzahl von Messungen gemittelt wird, sodass ein zufällig vorhandener Zeitversatz zwischen dem Nutzsignal (7) und dem Störsignal (8) herausgemittelt wird,
wobei als Zeitbasis die jeweiligen Nutzsignale einer Messung gewählt werden, sodass das Störsignal (8) einen zufällig vorhanden Zeitversatz aufweist und dass das Störsignal (8) über mehrere Messungen gemittelt wird, sodass die Störamplitude verringert wird.

2. Verfahren (9) nach Anspruch 1, **dadurch gekennzeichnet, dass** die Störamplitude aus dem zeitlich vor dem Nutzsignal (7) liegenden Störsignal (8) oder aus dem zeitlich nach dem Nutzsignal (7) liegenden Störsignal (8) bestimmt wird.

3. Verfahren (9) nach einem der Ansprüche 1 bis 2, **dadurch gekennzeichnet, dass** zur Bestimmung des Amplitudenverhältnisses die Störamplitude mit einem Korrekturfaktor korrigiert wird, der berücksichtigt, dass die bestimmte Störamplitude nicht der gewünschten Störamplitude, die zeitgleich mit dem Nutzsignal (7) auf den zweiten Ultraschallwandler (3) trifft, entspricht.

4. Verfahren (9) nach einem der Ansprüche 1 bis 3, **dadurch gekennzeichnet, dass** zur Bestimmung der Nutzamplitude die Amplitude des Nutzsignals (7) über eine Mehrzahl von Peaks gemittelt wird.

5. Verfahren (9) nach einem der Ansprüche 1 bis 3, **dadurch gekennzeichnet, dass** die Nutzamplitude und/oder die Störamplitude einer Peak-to-Peak-Amplitude, vorzugsweise um einen Nulldurchgang eines Störsignals (8) bzw. eines Nutzsignals (7), entspricht.

6. Verfahren (9) nach einem der Ansprüche 1 bis 3, **dadurch gekennzeichnet, dass** zur Bestimmung der Nutzamplitude und/oder der Störamplitude die Einhüllende eines zeitlich begrenzten Störsignals (8) bzw. eines zeitlich begrenzten Nutzsignals (7) bestimmt wird, wobei die Störamplitude das Maximum der Einhüllenden des zeitlich begrenzten Störsignals (8) ist und/oder wobei die Nutzamplitude das Maximum der Einhüllenden des zeitlich begrenzten Nutzsignals (7) ist.

7. Verfahren (9) nach einem der Ansprüche 1 bis 6, **dadurch gekennzeichnet, dass** unter der Bereitstellung einer Meldung die Ausgabe und/oder die Weiterleitung und/oder Anzeige einer Meldung zu verstehen ist.

8. Ultraschalldurchflussmessgerät (1) mit wenigstens einem ersten Ultraschallwandler (2), mit wenigstens einem zweiten Ultraschallwandler (3), mit wenigstens einem Messrohr (4) mit einer Messrohrwand (5) und mit wenigstens einer Steuer- und Auswerteeinheit (6),
wobei der erste Ultraschallwandler (2) zumindest zur Aussendung eines Messsignals ausgebildet ist und wobei der zweite Ultraschallwandler (3) zumindest für den Empfang des Messsignals ausgebildet ist,
wobei der erste Ultraschallwandler (2) und der zweite Ultraschallwandler (3) an dem Messrohr (4) angeordnet sind,
und wobei das Messrohr (4) im Betrieb von einem zu vermessenden Medium durchströmt wird,
**dadurch gekennzeichnet,**
**dass** die Steuer- und Auswerteeinheit (6) zur Durchführung eines Verfahrens nach einem der Ansprüche 1 bis 7 ausgebildet und eingerichtet ist.

## Claims

1. Method (9) for operating an ultrasonic flowmeter (1),
wherein the ultrasonic flowmeter (1) has at least one first ultrasonic transducer (2), at least one second ultrasonic transducer (3), at least one measuring tube (4) with a measuring tube wall (5) and at least one control and evaluation unit (6),
wherein the first ultrasonic transducer (2) is designed at least for emitting a measuring signal and wherein the second ultrasonic transducer (3) is designed at least for receiving the measuring signal,
wherein the first ultrasonic transducer (2) and the second ultrasonic transducer (3) are arranged on the measuring tube (4)
and wherein a medium to be measured flows through the measuring tube (4) during operation,
wherein, during a measurement, the method (9) comprises the following steps:
- emitting (10) a measuring signal by the first ultrasonic transducer (2), wherein a first part of the measuring signal propagates as an interference signal (8) along and/or within the measuring tube wall (5) and wherein a second part of the measuring signal propagates as a useful signal (7) through the medium,
- receiving (11) the interference signal (8) and the useful signal (7) by the second ultrasonic transducer (3) and forwarding the interference signal (8) and the useful signal (7) to the control and evaluation unit (6),
**characterized by** the following steps:
- determining (12) an interference amplitude of the interference signal (8) and determining (12) a useful amplitude of the useful signal (7) by the control and evaluation unit (6),
- determining (13) the amplitude ratio of the useful amplitude and the interference amplitude,
- providing (14) a message if the amplitude ratio falls below a specified lower limit value or exceeds a specified upper limit value,
wherein in order to determine the interference amplitude, the amplitude of the interference signal (8) is averaged over a plurality of peaks, wherein the peaks to be averaged are as close as possible to the useful signal,
or
wherein the received useful signal (7) is averaged over a plurality of measurements so that a randomly present time offset between the useful signal (7) and the interference signal (8) is averaged out,
wherein the respective useful signals of a measurement are selected as the time base, so that the interference signal (8) has a randomly present time offset, and that the interference signal (8) is averaged over a plurality of measurements, so that the interference amplitude is reduced.

2. Method (9) according to claim 1, **characterized in that** the interference amplitude is determined from the interference signal (8) lying temporally before the useful signal (7) or from the interference signal (8) lying temporally after the useful signal (7).

3. Method (9) according to any one of claims 1 to 2, **characterized in that**, in order to determine the amplitude ratio, the interference amplitude is corrected by a correction factor which takes into account that the determined interference amplitude does not correspond to the desired interference amplitude which impinges on the second ultrasonic transducer (3) at the same time as the useful signal (7).

4. Method (9) according to any one of claims 1 to 3, **characterized in that** to determine the useful amplitude, the amplitude of the useful signal (7) is averaged over a plurality of peaks.

5. Method (9) according to any one of claims 1 to 3, **characterized in that** the useful amplitude and/or the interference amplitude corresponds to the peak-to-peak amplitude, preferably around a zero crossing of an interference signal (8) or a useful signal (7).

6. Method (9) according to any one of claims 1 to 3, **characterized in that**, in order to determine the useful amplitude and/or the interference amplitude, the envelope of a time-limited interference signal (8) or of a time-limited useful signal (7) is determined, wherein the interference amplitude is the maximum of the envelope of the time-limited interference signal (8) and/or wherein the useful amplitude is the maximum of the envelope of the time-limited useful signal (7).

7. Method (9) according to any one of claims 1 to 6, **characterized in that** the providing a message is to be understood as the output and/or the forwarding and/or display of a message.

8. Ultrasonic flowmeter (1) with at least one first ultrasonic transducer (2), with at least one second ultrasonic transducer (3), with at least one measuring tube (4) with a measuring tube wall (5) and with at least one control and evaluation unit (6),
wherein the first ultrasonic transducer (2) is designed at least for emitting a measuring signal and wherein the second ultrasonic transducer (3) is designed at least for receiving the measuring signal,
wherein the first ultrasonic transducer (2) and the second ultrasonic transducer (3) are arranged on the measuring tube (4),
and wherein a medium to be measured flows through the measuring tube (4) during operation,
**characterized in**
**that** the control and evaluation unit (6) is designed and set up to perform a method according to any one of claims 1 to 7.

## Revendications

1. Procédé (9) de fonctionnement d'un débitmètre à ultrasons (1),
le débitmètre à ultrasons (1) comportant au moins un premier transducteur à ultrasons (2), au moins un deuxième transducteur à ultrasons (3), au moins un tube de mesure (4) ayant une paroi de tube de mesure (5) et au moins une unité de commande et d'évaluation (6).
le premier transducteur à ultrasons (2) étant conçu au moins pour émettre un signal de mesure et le deuxième transducteur à ultrasons (3) étant conçu au moins pour recevoir le signal de mesure,
le premier transducteur à ultrasons (2) et le deuxième transducteur à ultrasons (3) étant disposés sur le tube de mesure (4),
et un milieu à mesurer circulant à travers le tube de mesure (4) pendant le fonctionnement,
le procédé (9) comprenant les étapes suivantes pendant une mesure :
- émission (10) d'un signal de mesure par le premier transducteur à ultrasons (2), une première partie du signal de mesure se propageant sous forme de signal parasite (8) le long et/ou à l'intérieur de la paroi du tube de mesure (5) et une deuxième partie du signal de mesure se propageant sous forme de signal utile (7) à travers le milieu,
- réception (11) du signal parasite (8) et du signal utile (7) par le deuxième transducteur à ultrasons (3) et transmission du signal parasite (8) et du signal utile (7) à l'unité de commande et d'évaluation (6), **caractérisé par** les étapes suivantes :
- détermination (12) d'une amplitude parasite du signal parasite (8) et détermination (12) d'une amplitude utile du signal utile (7) par l'unité de commande et d'évaluation (6),
- détermination (13) du rapport d'amplitude de l'amplitude utile à l'amplitude parasite,
- fourniture (14) d'un message lorsque le rapport d'amplitude s'abaisse en dessous d'une valeur limite inférieure fixe ou dépasse une valeur limite supérieure fixe,
dans lequel, pour déterminer l'amplitude parasite, l'amplitude du signal parasite (8) est moyennée sur une pluralité de pics, les pics à moyenner étant situés aussi près que possible du signal utile,
ou
dans lequel le signal utile reçu (7) est moyenné sur une pluralité de mesures, de sorte qu'un décalage temporel présent de manière aléatoire entre le signal utile (7) et le signal parasite (8) est éliminé par calcul de moyenne,
dans lequel les signaux utiles d'une mesure sont respectivement sélectionnés comme base de temps, de sorte que le signal parasite (8) présente un décalage temporel aléatoire, et dans lequel le signal parasite (8) est moyenné sur une pluralité de mesures, de sorte que l'amplitude parasite est réduite.

2. Procédé (9) selon la revendication 1, **caractérisé en ce que** l'amplitude parasite est déterminée à partir du signal parasite (8) qui se situe dans le temps avant le signal utile (7) ou à partir du signal d'interférence (8) qui se situe dans le temps après le signal utile (7).

3. Procédé (9) selon l'une quelconque des revendications 1 ou 2, **caractérisé en ce que** pour déterminer le rapport d'amplitude, l'amplitude parasite est calculée avec un facteur de correction qui tient compte du fait que l'amplitude parasite déterminée ne correspond pas à l'amplitude parasite souhaitée qui atteint le deuxième transducteur à ultrasons (3) en même temps que le signal utile (7).

4. Procédé (9) selon l'une quelconque des revendications 1 à 3, **caractérisé en ce que** pour déterminer l'amplitude utile, l'amplitude du signal utile (7) est moyennée sur plusieurs pics.

5. Procédé (9) selon l'une quelconque des revendications 1 à 3, **caractérisé en ce que** l'amplitude utile et/ou l'amplitude parasite correspond à une amplitude crête à crête, de préférence au voisinage d'un passage par zéro d'un signal parasite (8) ou d'un signal utile (7).

6. Procédé (9) selon l'une quelconque des revendications 1 à 3, **caractérisé en ce que** pour déterminer l'amplitude utile et/ou l'amplitude parasite, l'enveloppe d'un signal parasite limité dans le temps (8) ou d'un signal utile limité dans le temps (7) est déterminée, l'amplitude parasite étant le maximum de l'enveloppe du signal parasite limité dans le temps (8) et/ou l'amplitude utile étant le maximum de l'enveloppe du signal utile limité dans le temps (7).

7. Procédé (9) selon l'une quelconque des revendications 1 à 6, **caractérisé en ce que** la fourniture d'un message s'entend comme étant la fourniture en sortie et/ou la transmission et/ou l'affichage d'un message.

8. Débitmètre à ultrasons (1) comprenant au moins un premier transducteur à ultrasons (2), au moins un deuxième transducteur à ultrasons (3), au moins un tube de mesure (4) ayant une paroi de tube de mesure (5) et au moins une unité de commande et d'évaluation (6),
le premier transducteur à ultrasons (2) étant conçu au moins pour émettre un signal de mesure et le deuxième transducteur à ultrasons (3) étant conçu au moins pour recevoir le signal de mesure,
le premier transducteur à ultrasons (2) et le deuxième transducteur à ultrasons (3) étant disposés sur le tube de mesure (4),
et un milieu à mesurer circulant à travers le tube de mesure (4) pendant le fonctionnement,
**caractérisé**
**en ce que** l'unité de commande et d'évaluation (6) est réalisée et conçue pour mettre en œuvre un procédé selon l'une quelconque des revendications 1 à 7.
